**Europäisches Patentamt**

**European Patent Office**

**Office européen des brevets**

(19)

(11) Veröffentlichungsnummer: **0 084 801**

**B1**

(12)

# EUROPÄISCHE PATENTSCHRIFT

(45) Veröffentlichungstag der Patentschrift:
**17.12.86**

(51) Int. Cl.⁴: **F 16 K 1/34, F 16 K 25/00**

(21) Anmeldenummer: **83100192.0**

(22) Anmeldetag: **12.01.83**

(54) **Steuerventil.**

(30) Priorität: **22.01.82 DE 3201876**

(73) Patentinhaber: **ROBERT BOSCH GMBH, Postfach 50, D-7000 Stuttgart 1 (DE)**

(43) Veröffentlichungstag der Anmeldung:
**03.08.83 Patentblatt 83/31**

(72) Erfinder: **Siegel, Heinz, Hohenlocher Strasse 86, D-7000 Stuttgart 40 (DE)**

(45) Bekanntmachung des Hinweises auf die Patenterteilung:
**17.12.86 Patentblatt 86/51**

(84) Benannte Vertragsstaaten:
**DE FR GB IT**

(56) Entgegenhaltungen:
**CH-A-528 692**
**DE-A-2 631 922**
**FR-A-2 470 314**

EP 0 084 801 B1

## Beschreibung

Die Erfindung geht aus von einem Steuerventil nach der Gattung des Hauptanspruchs. Bei einem derartigen bekannten Steuerventil ist der Hauptventilkörper in üblicher Weise mit seiner zylindrischen Außenfläche in einer zylindrischen Sackbohrung geführt. Das hat den Nachteil - insbesondere dann - wenn die zylindrische Führungsfläche des Ventilkörpers sehr lange ist - was bei mechanischen Belastungen des Ventilgehäuses von außen her die Führungsbohrung unter Umständen etwas verformt wird. Dann klemmt der Hauptventilkörper und kann seine Funktion nicht mehr oder nur noch bedingt ausüben. (DE-A-26 31 922)

Es ist weiterhin ein Steuerventil bekannt geworden, das einen Steuerschieber aufweist, an dessen beiden Enden Kugeln angeordnet sind, die einen größeren Durchmesser als der Schaft aufweisen und zur Führung des Steuerschiebers in der Führungsbohrung dienen. Die Kugeln dienen hier als Steuerkörper für die Zuleitung des von der Pumpe geförderten Druckmittel zu Auslaßbohrungen. Auf diese Weise ist also noch ein Steuerschieberventil mit Mehrwegefunktion geschaffen (CH-A-528 692).

Es ist Aufgabe der Erfindung, ein Steuerventil der eingangs genannten Art so weiterzubilden, daß es in seiner Funktions auch dann unbehindert ist, wenn äußere Kräfte auf das Ventil einwirken. Gelöst wird diese Aufgabe durch die im Kennzeichenteil des Anspruchs 1 genannten Mittel. Auf diese Weise wird verhindert, daß der Hauptventilkörper in seiner Beweglichkeit behindert ist.

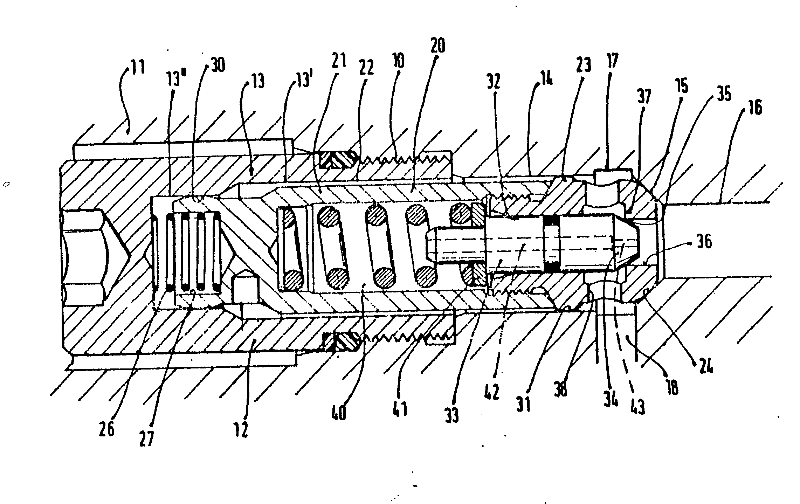

Ein Ausführungsbeispiel der Erfindung ist in der Zeichnung dargestellt und in der nachfolgenden Beschreibung näher erläutert. Sie zeigt einen Längsschnitt durch einen Ventilkörper.

In eine Bohrung 10 eines Ventilgehäuses 11 ist Führungskörper 12 eingeschraubt, der eine stufenförmige Sackbohrung 13 mit einer Stufe 13' größeren und einer Stufe 13'' kleineren Durchmessers aufweist. An die Stufe 13' größeren Durchmessers schließt sich eine im Ventilgehäuse ausgebildete achsgleiche Bohrung 14 mit genau demselben Durchmesser an. Sie geht in eine kegelige, als Ventilsitz dienende Fläche 15 über, auf die eine Abflußbohrung 16 folgt. Vor der kegeligen Fläche ist an der Bohrung 14 eine Ringnut 17 ausgebildet, in welche eine Zulaufbohrung 18 mündet.

Im Ventilgehäuse 11 ist ein aus zwei Teilen bestehender Ventilkörper 20 angeordnet, dessen einer Teil 21 eine Sackbohrung 22 aufweist, in welche das vordere Sitzteil 23 eingeschraubt ist. Das Sitzteil weist eine balligkegelige Sitzfläche 24 auf, und wird durch die Kraft einer Feder 26 auf den Ventilsitz 15 gedrückt, die sich in der Stufe 13'' der Stufenbohrung 13 befindet und mit einem Teil in eine Sackbohrung 27 am Ende des Ventilkörpers 20 hineinragt und dort anliegt.

Der Ventilkörper weist an seinem dem Ventilsitz 15 abgewandten Ende und an seiner Außenfläche eine ballige Führungsfläche 30 auf, die gleitend in der Stufe 13'' der Sackbohrung 13 geführt ist. Weiterhin weist der Ventilkörper 20 an seinem Sitzteil 23 eine zweite ballige Führungsfläche 31 auf, die gleitend in der Bohrung 14 des Ventilgehäuses 11 geführt ist. Da sich die Führungsfläche 23 nahe der Sitzfläche 24 befindet, weisen die beiden Führungsflächen einen großen Abstand auf, wodurch sie dem Ventilkörper 20 eine gute, klemmfreie Führung gewähren.

Im Sitzteil 23 ist eine Längsbohrung 32 ausgebildet, in der der Ventilkörper 33 eines Druckbegrenzungsventils gleitend angeordnet ist, der sich mit seiner kegeligen Sitzfläche 34 auf einen Ventilsitz 35 im Sitzteil 23 legt. Der Ventilsitz 35 ist gebildet durch eine Abflußbohrung 36 im Sitzteil 23 und die Flanke 37' einer ebenfalls dort ausgebildeten Ringnut 37 an der Bohrung 32. In die Ringnut 37 mündet eine durchgehend Radialbohrung 38, die mit der Ringnut 17 in Verbindung steht, wenn der Ventilkörper 20 mit seiner Sitzfläche 24 am Ventilsitz 15 anliegt.

Der Ventilkörper 33 wird durch die Kraft einer Feder 40 auf seinen Ventilsitz gedrückt, welche in der Sackbohrung 22 des Ventilkörpers 20 angeordnet ist. Die Feder wirkt über einen Federteller 41 auf den Ventilkörper 33, in dem noch eine durchgehende Längsbohrung 42 ausgebildet, durch welche die Bohrung 22 mit der Ablaufbohrung 16 verbunden ist. Der in der Zulaufbohrung 18 herrschende Druck wirkt auf den links vom Ventilsitz 35 befindlichen Abschnitt des Sitzteils 34.

Auf die Funktion des Steuerventils ist nicht weiter eingegangen, da nicht erfindungswesentlich. Der Ventilkörper 33 kann beispielsweise als Vorsteuerventil für den Ventilkörper 20 dienen. Es kommt bei dieter Erfindung lediglich auf die Art der Führung des Ventilkörpers 20 an.

## Patentansprüche

1. Steuerventil mit einem in einer stufenförmigen Sackbohrung (13) eines Führungskörpers (12) geführten Hauptventilkörper (20), der durch die Kraft einer Feder (26) mit einer an seiner einen Stirnseite ausgebildeten, etwa kegeligen Fläche (24) auf einen Ventilsitz (15) gedrückt wird und mit einem im Inneren des Hauptventilkörpers angeordneten, ebenfalls von einer Feder (40) belasteten Vorsteuerventil (33), wobei die Zuflußbohrung (16) koaxial zum Hauptventilkörper (20) verläuft und die Ablaufbohrung (18) an einer im Bereich des Ventilsitzes (15) angeordneten Ringnut (17) mündet, dadurch gekennzeichnet, daß der Hauptventilkörper (20) nahe seinen Enden mit an seiner Oberfläche ballig ausgebildeten Abschnitten (30, 31) einerseits am Führungskörper (12) und andererseits am Ventilgehause (11) geführt wird.

2. Venilkörper nach Anspruch 1, dadurch gekennzeichnet, daß die Sitzfläche (24) des Hauptventilkörpers ballig ausgebildet ist, der Ventilsitz (15) als ebene, kegelige Fläche.

3. Ventilkörper nach Anspruch 1 und/oder 2, dadurch gekennzeichnet, daß der Ventilsitz ballig ausgebildet ist, die Sitzfläche des Hauptventilkörpers dagegen als ebene, kegelige Fläche.

## Claims

1. Control valve having a main valve body (20) which is guided in a step-shaped blind bore (13) of a guide element (12) and is pressed by the force of aspring (26), by an approximately conical face (24) at its one end, onto a valve seat (15) and having a pilot control valve (33) arranged inside the main valve body and likewise loaded by a spring (4a), the inflow bore (16) running coaxial to the main valve body (20) and the outflow bore (18) opening out at an annular groove (17) arranged in the region of the valve seat (15), characterized in that the main valve body (20) is guided in the vicinity of its ends by sections (30, 31) designed convexly at its surface on the one hand against the guide element (12) and on the other hand against the valve housing (11).

2. Valve body according to Claim 1, characterized in that the seating (24) of the main valve body is convexly designed, the valve seat (15) being designed as a plane, conical face.

3. Valve body according to Claim 1 and/or 2, characterized in that the valve seat is convexly designed, the seating of the main valve body on conversely been designed as a plane, conical face.

## Revendications

1.- Vanne de contrôle avec un corps (20) de vanne principale guidé dans un alésage borgne (13) épaulé d'un corps de guidage (12), et qui sous l'action d'un ressort (26) prend appui sur un siège de vanne (15) par une surface à peu près conique (24) ménagée sur l'une de ses faces frontales, et avec une vanne de pré-commande (33) disposée à l'intérieur du corps de la vanne principale et également sollicitée par un ressort (40), le perçage d'alimentation (16) s'étendant co-axialement par rapport au corps (20) de la vanne principale, tandis que le perçage d'évacuation (18) débouche sur une gorge annulaire (17) disposée dans la zone du siège de vanne (15), vanne caractérisée en ce que le corps (20) de la vanne principale est guidé au voisinage de ses extrémités par des parties bombées (30, 31) de sa surface, d'une part, contre le corps de guidage (12) et, d'autre part, contre le boîtier de vanne (11).

2.- Corps de vanne selon la revendication 1, caractérisé en ce que la surface d'appui (24) du corps de la soupape principale est bombée, tandis que le siège de soupape (15) est une surface conique lisse.

3.- Corps de vanne selon la revendication 1 et/ou la revendication 2, caractérisé en ce que le siège de vanne est bombé, tandis que la surface d'appui du corps de la soupape principale est par contre une surface conique lisse.